# EUROPÄISCHE PATENTSCHRIFT

(11) **EP 1 872 997 B1**
(45) Veröffentlichungstag und Bekanntmachung des Hinweises auf die Patenterteilung: **02.03.2011**
(21) Anmeldenummer: 07009754.8
(22) Anmeldetag: 16.05.2007
(51) Int. Cl.: B60K 28/02, B60W 30/08

(54) **Kraftfahrzeug umfassend wenigstens ein den Abstand zu einem vorausfahrenden Fahrzeug erfassendes Abstandswarnsystem, insbesondere ein Längsführungssystem**
Motor vehicle with a distance warning system which at least reads the distance to a vehicle driving in front, in particular a linear track system
Véhicule automobile comportant au moins un système de signalisation des distances détectant la distance avec un véhicule le précédant, en particulier un système de guidage longitudinal

(30) Priorität: 30.06.2006 DE 102006030370
(43) Veröffentlichungstag der Anmeldung: 02.01.2008
(73) Patentinhaber: AUDI AG, 85045 Ingolstadt (DE)
(72) Erfinder: Sacher, Heike, 82194 Gröbenzell (DE); Nabholz, Andreas, 72800 Eningen (DE)
(74) Vertreter: Thielmann, Frank

(56) Entgegenhaltungen:
- DE-A1- 10 103 401
- DE-A1- 19 510 910
- DE-A1- 19 806 687

## Beschreibung

Die Erfindung betrifft ein Kraftfahrzeug gemäß Oberbegriff des Patentanspruchs 1.

Zunehmend werden in Kraftfahrzeugen Fahrerassistenzsysteme verbaut, die den Fahrer beim Fahren unterstützen. Als ein solches Fahrerassistenzsystem ist beispielsweise ein Abstandswarnsystem bekannt, mittels dem der Abstand zu einem vorausfahrenden Fahrzeug erfasst wird und bei Erfassung eines Warnschwellenabstands, also eines kritischen Abstands zum vorausfahrenden Fahrzeug ein Warnsignal ausgegeben wird. Als ein solches Abstandswarnsystem ist beispielsweise ein Längsführungssystem in Form eines den Abstand zum vorausfahrenden Fahrzeugs automatisch regelnden Systems, häufig auch ACC-System (ACC = Adaptive-Cruise-Control) genannt, zu nennen. Ein solches System verfügt über mehrere in der Fahrzeugfront integrierte Abstandsmesssensoren. Fahrerseitig kann eine gewünschte Geschwindigkeit eingestellt werden, die beizubehalten ist. Das Längsführungssystem regelt nun den Abstand zu einem vorausfahrenden Fahrzeug unter Berücksichtigung der eingestellten Geschwindigkeit derart, dass das Fahrzeug bei einer Annäherung an das vorausfahrende Fahrzeug abhängig vom Ist-Abstand geregelt verzögert wird. Ein solches Längsführungssystem entbindet den Fahrer jedoch nicht von seiner Mitwirkung. Ab Erreichen eines Mindestabstands ist der Fahrer zur Übernahme der Fahrzeugkontrolle aufzufordern, was durch Gabe eines Warnsignals erfolgt. Hierzu sind im Steuergerät des Abstandswarnsystems oder Längsführungssystems entsprechende Kennlinien oder Kennfelder abgelegt, die unter Berücksichtigung der gegebenen Geschwindigkeit entsprechende Warnschwellenabstände definieren. Die Abstandserfassung erfolgt üblicherweise durch Ermittlung der Zeitlücke zwischen dem eigenen Fahrzeug und dem vorausfahrenden Kraftfahrzeug.

Die Parametrierung eines solchen Systems, also die Festlegung der Warnschwellenabstände, bei Erfassung welcher die Warnsignalgabe erfolgt, die den Fahrer auf die kritische Situation hinweist und ihn zur Übernahme (also zum Bremsen) auffordert, ist vorbestimmt, sie ist also grundsätzlich für alle Fahrzeugtypen und alle Fahrer gleich. Dies ist insofern nachteilig, als für sehr reaktionsschwache Fahrer, beispielsweise ältere Personen, die Wamschwellen, hier jeweils der Warnschwellenabstand, mitunter zu hoch angesetzt ist, das heißt, die Warnung zur Übernahme, also zur aktiven Einleitung einer starken Verzögerung erfolgt für diese Fahrer zu spät bzw. führt dazu, dass diese Fahrer noch extremer als ohnehin bremsen müssen, um eine Kollision zu vermeiden. Auf der anderen Seite werden reaktionsschnelle Fahrer, die bei Gabe des Warnsignals in sehr kurzer Zeit den Bremsvorgang übernehmen können, durch eine zu frühe Warnsignalgabe abgelenkt oder grundsätzlich gestört, was möglicherweise die Akzeptanz des Fahrerassistenzsystems dem Grunde nach verschlechtert.

Aus DE 195 10 910 A1 ist ein Messgerät zur Erfassung des Abstands zwischen Fahrzeugen und ein Warnsystem bekannt, bei dem mittels verschiedener Einrichtungen ein der Fahrerwarnung zu Grunde liegender Referenzabstand ermittelt wird.

Aus DE 101 03 401 A1 ist ein Gefahrenabwendungssystem für ein Fahrzeug bekannt, bei dem zur Ermittlung einer Warnsignalgabe eine Information betreffend die Fahrerbelastung berücksichtigt wird.

Aus DE 103 39 647 A1 ist eine Vorrichtung zur Fahrerwarnung bekannt, bei der eine Adaption von einer Warnsignalgabe zu Grunde liegenden Grenzwerten möglich ist.

Der Erfindung liegt damit das Problem zugrunde, ein Kraftfahrzeug anzugeben, das eine auf die Bedürfnisse des jeweiligen Fahrers abgestimmte Warnsignalgabe zulässt.

Zur Lösung dieses Problems ist ein Kraftfahrzeug der eingangs genannten Art mit den Merkmalen des Kennzeichens des Patentanspruchs 1 vorgesehen.

Bei dem erfindungsgemäßen Kraftfahrzeug wird das fahrertypische Bremsverhalten und letztlich das hieraus resultierende Beschleunigungsverhalten in Bezug auf eine oder mehrere Mess- oder Erfassungszeitpunkte des Abstandswarnsystems berücksichtigt bzw. anhand entsprechend ermittelter Informationen erfasst und in Abhängigkeit dieser Informationen fahrerindividuell der Zeitpunkt der Warnsignalgabe bzw. der Warnschwellenabstand verändert und angepasst. Dies ermöglicht eine kontinuierliche Veränderung und Anpassung während des Fahrbetriebs, nachdem die Informationen laufend in Verbindung mit entsprechenden Bremspedalbetätigungen ermittelt werden können. Grundlage für die Informationserfassung ist letztlich stets das Verhalten des Fahrers beim Bremsen bzw. der Zeitpunkt des Bremsens in Verbindung mit dem gegebenen Ist-Abstand zum vorausfahrenden Fahrzeug. Durch Ermittlung dieser Informationen kann folglich das allgemeine Bremsverhalten oder Reaktionsvermögen des Fahrers beschrieben werden. Anhand dieser Informationen, bei denen es sich letztlich um aufgenommene Messwerte handelt, worauf nachfolgend noch eingegangen wird, wird nun der Signalgabezeitpunkt und damit der Warnschwellenabstand fahrerindividuell angepasst. Die schwächere Reaktionsfähigkeit eines Fahrers kann hierüber erkannt werden, was dazu führt, dass der Signalgabezeitpunkt früher gesetzt wird, mithin also der Warnschwellenabstand vergrößert wird. Ein solcher Fahrer kann also frühzeitiger gewarnt werden, so dass er zu einem früheren Zeitpunkt auf die etwaige Gefahrensituation, die sich anbahnen könnte, hingewiesen werden kann. Geübte, reaktionsschnelle Fahrer werden ebenfalls in ihrem Fahrverhalten über die erfassten Informationen "abgebildet", auch hier kann eine individuelle Anpassung des Signalgabezeitpunkts bzw. des Warnschwellenabstands in der Richtung erfolgen, dass das Warnsignal später gegeben wird, also der Warnschwellenabstand verkürzt wird. Vorausschauende Fahrzeugführer werden also seltener durch für sie möglicherweise störende Warnsignale belästigt.

Nachdem wie beschrieben die Informationserfassung während der Fahrt kontinuierlich erfolgt, kann auf diese Weise auch eine sich über die Zeit bei längeren Fahrten ändernde Fahrweise erfasst werden. Bei langen Fahrten kann es mitunter zu Ermüdungserscheinungen kommen, die sich in längeren Reaktionszeiten beispielsweise nach Gabe eines Warnsignals äußern, oder die sich in einem ruppigeren, abrupteren Bremsverhalten äußern, nachdem der ermüdende Fahrer beispielsweise zu nah auf ein vorausfahrendes Fahrzeug auffährt. Auch diese Entwicklung kann erfasst und über die Informationen abgebildet werden und in die Veränderung des Signalgabezeitpunkts und damit des Warnschwellenabstands eingehen. Der Signalgabezeitpunkt würde dann wieder früher liegen, der Warnschwellenabstand würde vergröβert werden.

Voraussetzung ist, dass das Abstandswamsystem, also beispielsweise das ACC-Längsführungssystem, während der Informationserfassung ständig zumindest in seiner abstandserfassenden Funktion arbeitet, damit stets ein Bezug zwischen der Bremspedalbetätigung und einem Ist-Abstand zu einem vorausfahrenden Fahrzeug gegeben ist und erfasst werden kann. Die Längsregelungsfunktion ist nicht zwingend erforderlich, um grundsätzlich die kontinuierliche Anpassung des Signalgabezeitpunkts bzw. des Warnschwellenabstands vorzunehmen. Die Warnsignalausgabe erfolgt nur, wenn das Längsführungssystem vollkommen aktiv ist, nur dann bedarf es der Warnsignalausgabe. Handelt es sich um ein reines Abstandswarnsystem ohne Regelfunktion, so wird ohnehin kontinuierlich bei zu geringem Abstand ein Warnsignal ausgegeben. Grundsätzlich kommt es also auf die kontinuierliche Erfassung der Entfernung bzw. Zeitlücke zum vorausfahrenden Fahrzeug durch das Abstandswarnsystem oder Längsführungssystem an, das dann entsprechende Warnzeitpunkte definiert und diese gegebenenfalls über geeignete Systeme dem Fahrer signalisiert bzw., je nach Ausgestaltung des Systems, auch aktiv beispielsweise im Falle eines Notbremssystems eingreift. Über ein Steuergerät wird wie beschrieben die Fahrertätigkeit in Form der ermittelten Informationen erfasst, wobei dies in Abhängigkeit oder unter Bezug zu den im Erfassungszeitpunkt definierten, geschwindigkeitsabhängigen Warnschwellenabständen erfolgt. Zur Analyse bzw. zur Entscheidung, eine Warnschwellenabstand tatsächlich zu verändern, ist eine Mindestanzahl an Längsregelungsaktivitäten des Fahrers, also an Bremspedalbetätigungen notwendig, um eine hinreichende Bewertungsgrundlage zu schaffen. Die entsprechenden, zur Bewertung tauglichen Informationen werden in Form eines oder mehrerer geeigneter Reaktions- oder Verhaltenskennwerte im Rahmen der Parametrierung des Systems, also der Bestimmung des Signalgabezeitpunkts und des Warnschwellenabstands berücksichtigt.

Wenngleich es grundsätzlich auf die Bestimmung des Warnsignalgabezeitpunkts bzw. des Warnschwellenabstands ankommt, bzw. auf dessen fahrerindividuelle Anpassung, so besteht grundsätzlich die Möglichkeit, die Informationen, die das Fahrerverhalten abbilden, auch zur Parametrierung anderer Fahrerassistenzsysteme zu verwenden. In modernen Fahrzeugen sind Fahrerassistenzsysteme z. B. in Form eines Anhaltewegverkürzungssystems oder eines automatischen Notbremssystems bekannt, bei denen es sich letztlich auch um Längsführungssysteme handelt, die mitunter auch Teil eines ACC-Systems sind. Die Funktion oder das Eingreifen dieser Systeme ist letztlich auch von einem Warnschwellenabstand bzw. einem kritischen Abstand zum vorausfahrenden Fahrzeug abhängig. Ist nun über die Informationserfassung ermittelt worden, dass der Fahrer sehr reaktionsschnell und vorausschauend fährt, kann der Eingriffszeitpunkt dieser Systeme etwas später gesetzt werden, als bei reaktionsschwachen Fahrern, die einer wesentlich früherzeitigen Unterstützung bedürfen.

Erfindungsgemäß kann ferner vorgesehen sein, dass der Warnschwellenabstand innerhalb eines vorbestimmten Intervalls veränderbar ist. Dies schließt aus, dass der Warnschwellenabstand bei sehr reaktionsschnellen Fahrern oder Fahrern, die sehr gerne extrem nah auffahren, zu kurz wird, mithin also die Warnsignalgabe oder der Systemeingriff deutlich zu spät erfolgt und das System letztlich die mitunter potentiell gefährliche Fahrweise des Fahrers noch unterstützt. Auf der anderen Seite wird hierdurch vermieden, dass deutlich zu früh gewarnt wird, wenn also eine potentielle Gefahrensituation noch kaum absehbar ist.

Wie bereits beschrieben ist es erforderlich, dass das entsprechende Abstandswarnsystem bzw. grundsätzlich das System, das eben die Abstandserfassung durchführt, zumindest insoweit betrieben wird, dass die Abstandserfassung kontinuierlich erfolgt, unabhängig davon, ob das System insoweit zugeschaltet ist, dass es gegebenenfalls ein Warnsignal ausgibt oder aktiv in den Fahrbetrieb eingreift. Daneben ist der Fall zu berücksichtigen, dass das System vollständig zugeschaltet ist, mithin also bei Erfassen eines Warnschwellenabstands auch ein Warnsignal ausgegeben wird. Unter Berücksichtigung dieser beiden Betriebsbedingungen sieht die Erfindung vor, dass als eine der Veränderung zugrunde liegende Information den Reaktionszeitpunkt zwischen dem Zeitpunkt der tatsächlichen Gabe eines Warnsignals bei im aktiven Warnbetrieb betriebenen Abstandswarnsystem oder dem Zeitpunkt der fiktiven Gabe eines Warnsignals bei nur im Abstandserfassungsbetrieb betriebenen Abstandswarnsystem und einer nachfolgenden Betätigung des Bremspedals ermittelbar und verarbeitbar ist. Im erstgenannten Fall, wenn das Abstandswarnsystem also im aktiven Warnbetrieb arbeitet, mithin also ein akustisches Warnsignal bei Erfassen eines kritischen Abstands ausgegeben wird, wird als Information die tatsächliche Reaktionszeit des Fahrers bis zum Betätigen des Bremspedals ermittelt. Je schneller er die Bremse betätigt, nachdem ihm das Warnsignal gegeben ist, umso reaktionsschneller ist der Fahrer. Die erfasste Information ist letztlich also das Zeitintervall zwischen Signalgabe und Bremspedalbetätigung. Ist das System nur im Abstandserfassungsbetrieb zugeschaltet, wird also keine Warnsignalgabe erfolgen, so wird als Information das Zeitintervall zwischen einer fiktiven Signalgabe und der tatsächlichen Bremspedalbetätigung aufgenommen. Dem Abstands- oder Längsführungssystem ist kontinuierlich der Ist-Abstand zum vorausfahrenden Fahrzeug bekannt. Ihm ist aber auch der Warnschwellenabstand bezogen auf die gefahrene Geschwindigkeit und damit auch der Signalgabezeitpunkt bekannt, zu dem im normalen Warnbetrieb ein Warnsignal ausgegeben werden müsste. Diese fiktive Signalgabezeitpunkt (weil eben kein Warnsignal gegeben wird) bzw. der zugeordnete Warnschwellenabstand wird nun zur Informationsermittlung berücksichtigt. Es wird die Zeitspanne ermittelt, die zwischen dem fiktiven Signalgabezeitpunkt und der tatsächlichen Bremspedalbetätigung liegt. Auch hierüber kann, auch wenn das System nicht im Warnmodus betrieben wird, das Fahrerverhalten bzw. das Reaktionsverhalten abgebildet werden.

Als weitere Information kann eine ein Maß für die aus der Betätigung des Bremspedals resultierende Verzögerung des Kraftfahrzeugs darstellende Information, insbesondere die Geschwindigkeit des Bremsdruckaufbaus ermittelbar und verarbeitbar sein. Hierüber kann erfasst werden, ob der Fahrer zögerlich oder kräftig bremst, es also mithin zu einer schwachen oder starken Verzögerung des Fahrzeugs kommt, was ebenfalls eine für die Parametrierung des Warnschwellenabstands relevante Information ist. Denn hieraus kann letztlich das grundsätzliche Bremsverhalten abgegriffen werden, nämlich ob der Fahrer grundsätzlich sehr stark abbremst, unabhängig davon, wie nun konkret der Ist-Abstand zum Fahrzeug ist, oder ob der Fahrer eher langsam bremst und auf das vorausfahrende Fahrzeug aufrollt.

Als weitere Information kann ferner der Ist-Abstand zu dem vorausfahrenden Fahrzeug nach Erreichen einer im Wesentlichen der Geschwindigkeit des vorausfahrenden Fahrzeugs entsprechenden Eigengeschwindigkeit ermittelbar und verarbeitbar sein. Hierüber wird erfasst, wie nah der Fahrer nach Betätigen der Bremse und Herunterbremsen auf eine dem vorausfahrenden Fahrzeug annähernd entsprechende Eigengeschwindigkeit gekommen ist. Hier wird also die verbleibende "Sicherheitsreserve" nach dem Bremsmanöver durch Ermittlung des Abstands oder der Zeitlücke bestimmt, wenn die eigene Geschwindigkeit wieder im Wesentlichen der Geschwindigkeit des vorausfahrenden Fahrzeugs entspricht.

Bevorzugt werden alle drei der genannten Informationen zu einem Bremsmanöver aufgenommen und über ein die Messwerte erfassendes bzw. auswertendes Steuergerät, gegebenenfalls das Steuergerät des Abstandswarn-oder Längsführungssystems, ausgewertet und ein entsprechender Reaktionskennwert ermittelt, der gestützt auf diese einzelnen Informationen das individuelle Fahrerverhalten beschreibt und als Basis für die Anpassung des Signalgabezeitpunkts bzw. des Warnschwellenabstands dient. Hierbei kann es sich um einen Faktor handeln, mit dem die gegebene Parametrisierung gewichtet wird oder dergleichen.

Zusätzlich zum Warnschwellenabstand kann auch die Dynamik des die Abstandsmessung durchführenden Längsführungssystems oder eines anderes Fahrerassistenzsystems, mithin also die Eingriffsgeschwindigkeit des entsprechenden Systems, und/oder die durch Steuerung mittels des die Abstandsmessung durchführenden Längsführungssystems erwirkbare maximale Verzögerung des Kraftfahrzeugs in Abhängigkeit der Informationen veränderbar sein. Auch hier erfolgt also eine individuelle Anpassung dahingehend, wie stark das Längsführungssystem oder ein anderes Fahrerassistenzsystem im Eingriffszeitpunkt maximal verzögert.

Der Zeitpunkt der Gabe des Warnsignals und damit der Warnschwellenabstand bei Inbetriebnahme des Kraftfahrzeugskann stets gleich sein und die Veränderung nur während des laufenden Fahrbetriebs durchführbar sein. Es ist hier also eine kurzfristige Erfassungsdauer vorgesehen. Informationen werden nur während einer Fahrt jeweils ab Fahrtbeginn erfasst und ausgewertet und die Anpassung des Signalgabezeitpunkts bzw. Warnschwellenabstand nur während dieser Fahrt vorgenommen. Nach Abstellen des Fahrzeugs und einer erneuten Inbetriebnahme wird eine vorherige Veränderung nicht mehr berücksichtigt, es wird stets auf fest eingestellte Parameter zurückgegriffen, die während der erneuten Fahrt wiederum veränderbar sind.

Die Erfindung sieht demgegenüber jedoch vor, dass eine Einrichtung zur Fahrererkennung vorgesehen ist und ein veränderter Warnschwellenabstand fahrerspezifisch abspeicherbar ist. Hier wird eine längerfristige Erfassungsdauer vorgesehen. Durch eine geeignete Fahrererkennung werden speziell für diesen Fahrer über einen längeren Zeitraum, also eine beliebige Vielzahl an individueller Fahrten fahrerspezifische Informationen gesammelt. Eine Veränderung des Signalgabezeitpunkts oder des Warnschwellenabstands wird beim Abstellen des Fahrzeugs abgespeichert und, wenn derselbe Fahrer wieder erkannt wird, während einer späteren Fahrt automatisch der Systemsteuerung zugrunde gelegt. Diese geänderten Parameter können dann wiederum in Abhängigkeit des Fahrbetriebs verändert werden. Eine neue Veränderung geht also immer von einer vorherigen Veränderung aus.

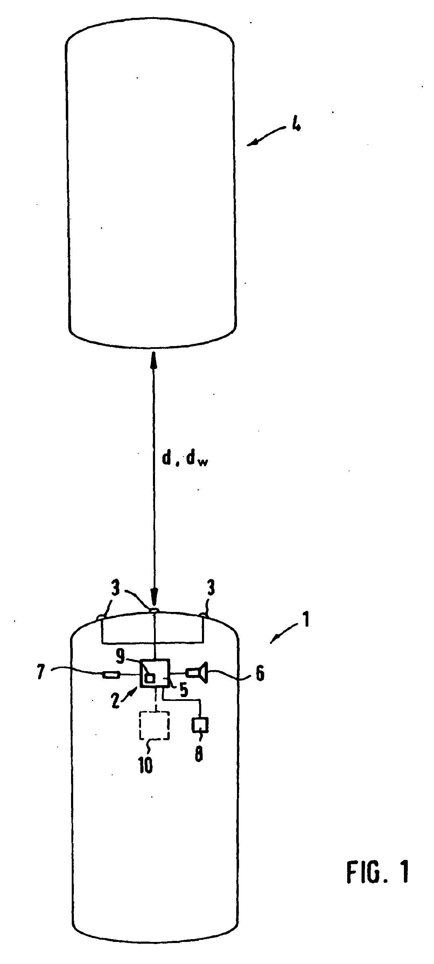

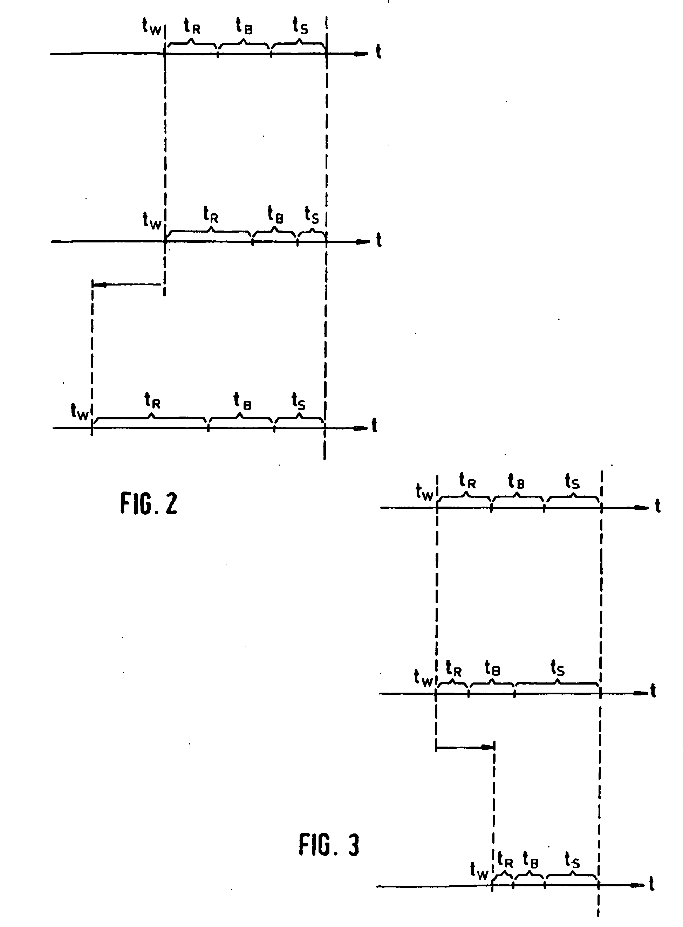

## Patentansprüche

1. Kraftfahrzeug umfassend wenigstens ein den Abstand zu einem vorausfahrenden Fahrzeug erfassendes Abstandswarnsystem (2), insbesondere ein Längsführungssystem, wobei über dieses Abstandswarnsystem (2) oder ein anderes fahrzeugseitig vorgesehenes Fahrerassistenzsystem bei Erfassung eines Abstandes, der gleich einem mit ihm verglichenen Warnschwellenabstand (d_{w}) ist, wenigstens ein, vorzugsweise eine Handlung des Fahrers erwirkendes, Warnsignal ausgebbar ist, wobei der Zeitpunkt (t_{w}) der Gabe des Warnsignals und damit der Warnschwellenabstand (d_{w}) in Abhängigkeit wenigstens einer das Bremsverhalten und/oder das Reaktionsvermögen des Fahrers beschreibenden, anhand einer oder mehrerer in Abhängigkeit von Betätigungen eines Bremspedals (7) ermittelter Informationen verändert wird,
**dadurch gekennzeichnet,**
**dass** eine Einrichtung (8) zur Fahrererkennung wie ein Bildaufnahmesystem oder ein Fingerabdruckerkennungssystem vorgesehen ist, dass ein veränderter Warnschwellenabstand (d_{w}) beim Abstellen des Kraftfahrzeugs fahrerspezifisch abgespeichert wird und bei Erkennung desselben Fahrers während einer späteren Fahrt automatisch der Systemsteuerung zugrunde gelegt wird, und dass bei einer längerfristigen Erfassungsdauer eine neue Veränderung des Warnschwellenabstandes immer von dem vorherigen geänderten und gespeicherten Warnschwellenabstand ausgeht, wobei als eine der Veränderung zugrunde liegende Information die Reaktionszeit (t_{R}) zwischen dem Zeitpunkt (t_{w}) der tatsächlichen Gabe eines Warnsignals bei im aktiven Warnbetrieb betriebenem Abstandswarnsystem (2) oder dem Zeitpunkt (t_{w}) der fiktiven Gabe eines Warnsignals bei nur im Abstandserfassungsbetrieb betriebenem Abstandswarnsystem (2) und einer nachfolgenden Betätigung des Bremspedals (7) ermittelbar und verarbeitbar ist.

2. Kraftfahrzeug nach Anspruch 1, **dadurch gekennzeichnet, dass** der Warnschwellenabstand (d_{w}) innerhalb eines vorbestimmten Intervalls veränderbar ist.

3. Kraftfahrzeug nach Anspruch 1 oder 2,
**dadurch gekennzeichnet,**
**dass** als weitere Information eine ein Maß für die aus der Betätigung des Bremspedals (7) resultierende Verzögerung des Kraftfahrzeugs (1) darstellende Information, insbesondere die Geschwindigkeit des Bremsdruckaufbaus ermittelt und verarbeitet wird.

4. Kraftfahrzeug nach einem der vorangehenden Ansprüche,
**dadurch gekennzeichnet,**
**dass** als weitere Information der Ist-Abstand zu dem vorausfahrenden Fahrzeug (4) nach Erreichen einer im wesentlichen der Geschwindigkeit des vorausfahrenden Fahrzeugs (4) entsprechenden Eigengeschwindigkeit ermittelt und verarbeitet wird.

5. Kraftfahrzeug nach einem der vorangehenden Ansprüche,
**dadurch gekennzeichnet,**
**dass** zusätzlich zum Warnschwellenabstand (d_{w}) auch die Dynamik des die Abstandsmessung durchführenden Längsführungssystems (2) oder eines anderen Fahrerassistenzsystems (10) und/oder die durch Steuerung mittels des die Abstandsmessung durchführenden Längsführungssystems (2) oder eines anderen Fahrerassistenzsystems (10) erwirkbare maximale Verzögerung des Kraftfahrzeugs (1) in Abhängigkeit der Information verändert wird.

6. Kraftfahrzeug nach einem der vorangehenden Ansprüche,
**dadurch gekennzeichnet,**
**dass** zwei oder mehr Warnsignale, gegebenenfalls unterschiedlich, ausgegeben und verändert werden.

## Claims

1. Motor vehicle comprising at least one distance warning system (2) which detects the distance from a vehicle travelling in front, in particular a longitudinal control system, with at least one warning signal, which preferably causes an action by the driver, being output by means of this distance warning system (2) or another driver assistance system which is provided in the vehicle when a distance which is equal to a warning threshold distance (d_{w}) which is compared with said distance is detected, with the time (t_{w}) at which the warning signal is emitted, and therefore the warning threshold distance (d_{w}), being changed as a function of at least one item of information which describes the braking behaviour and/or the reaction capability of the driver on the basis of one or more items of information which are determined as a function of operations of a brake pedal (7),
**characterized**
**in that** a device (8) for driver identification, such as an image recording system or a fingerprint identification system, is provided, in that a changed warning threshold distance (d_{w}) is stored in a driver-specific manner when the motor vehicle is turned off and is automatically used as the basis for controlling the system when the same driver is identified during a subsequent driving operation, and in that, in the event of a longer-term detection period, a new change in the warning threshold distance always proceeds from the previous changed and stored warning threshold distance, it being possible to determine and process the reaction time (t_{R}) between the time (t_{w}) at which a warning signal is actually emitted when the distance warning system (2) is operated in the active warning mode or the time (t_{w}) at which a warning signal is fictionally emitted when the distance warning system (2) is operated only in the distance detection mode and a subsequent operation of the brake pedal (7) as an item of information on which the change is based.

2. Motor vehicle according to Claim 1, **characterized in that** the warning threshold distance (d_{w}) can be changed within a predetermined interval.

3. Motor vehicle according to Claim 1 or 2, **characterized in that** an item of information which represents a measure of the deceleration of the motor vehicle (1) which results from the operation of the brake pedal (7), in particular the speed of the build up of brake pressure, is determined and processed as a further item of information.

4. Motor vehicle according to one of the preceding claims, **characterized in that** the actual distance from the vehicle (4) travelling in front after an actual speed which corresponds substantially to the speed of the vehicle (4) travelling in front is reached is determined and processed as a further item of information.

5. Motor vehicle according to one of the preceding claims, **characterized in that**, in addition to the warning threshold distance (d_{w}), the dynamics of the longitudinal control system (2), which carries out the distance measurement, or another driver assistance system (10) and/or the maximum deceleration of the motor vehicle (1), which can be caused by control by means of the longitudinal control system (2) which carries out the distance measurement or another driver assistance system (10), is changed as a function of the item of information.

6. Motor vehicle according to one of the preceding claims, **characterized in that** two or more warning signals are output and changed, possibly differently.

## Revendications

1. Véhicule automobile comprenant au moins un système d'avertissement de distance (2) détectant la distance par rapport à un véhicule le précédant, en particulier un système de guidage longitudinal, au moins un signal d'avertissement, de préférence occasionnant une manoeuvre du conducteur, pouvant être émis par le biais de ce système d'avertissement de distance (2) ou d'un autre système d'assistance au conducteur prévu du côté du véhicule lors de la détection d'une distance qui est égale à une distance seuil d'avertissement comparée à elle (d_{w}), l'instant (t_{w}) auquel le signal d'avertissement est donné et donc la distance seuil d'avertissement (d_{w}) étant modifiés en fonction d'au moins une information décrivant le comportement de freinage et/ou la capacité de réaction du conducteur, à l'aide d'une ou de plusieurs informations déterminées en fonction d'actionnements d'une pédale de frein (7),
**caractérisé en ce que**
l'on prévoit un dispositif (8) de reconnaissance du conducteur comme un système d'enregistrement d'images ou un système de reconnaissance d'empreintes digitales, **en ce qu'**une distance seuil d'avertissement modifiée (d_{w}) est mémorisée de manière spécifique au conducteur lors de l'arrêt du véhicule automobile, et à la reconnaissance dudit conducteur au cours d'une conduite ultérieure, est prise pour base automatiquement par la commande du système, et **en ce que** dans le cas d'une durée de détection à plus long terme, une nouvelle modification de la distance seuil d'avertissement part toujours de la distance seuil d'avertissement modifiée antérieurement et mémorisée, le temps de réaction (t_{R}) entre l'instant (t_{w}) où un signal d'avertissement est effectivement donné lorsque le système d'avertissement de distance (2) fonctionne en mode d'avertissement actif ou l'instant (t_{w}) où un signal d'avertissement fictif est donné lorsque le système d'avertissement de distance (2) fonctionne seulement en mode de détection de distance et un actionnement subséquent de la pédale de frein (7) pouvant être déterminé et traité en tant qu'information prise pour base pour la modification.

2. Véhicule automobile selon la revendication 1, **caractérisé en ce que**
la distance seuil d'avertissement (d_{w}) peut être modifiée dans un intervalle prédéterminé.

3. Véhicule automobile selon la revendication 1 ou 2, **caractérisé en ce que**
l'on détermine et traite en tant qu'information supplémentaire une information constituant une mesure du ralentissement du véhicule automobile (1) résultant de l'actionnement de la pédale de frein (7), notamment la vitesse de l'augmentation de la pression de freinage.

4. Véhicule automobile selon l'une quelconque des revendications précédentes,
**caractérisé en ce que**
l'on détermine et traite en tant qu'information supplémentaire la distance instantanée par rapport au véhicule qui précède (4) après l'obtention d'une vitesse propre correspondant essentiellement à la vitesse du véhicule qui précède (4).

5. Véhicule automobile selon l'une quelconque des revendications précédentes,
**caractérisé en ce que**
l'on modifie, en fonction de l'information, en plus de la distance seuil d'avertissement (d_{w}), la dynamique du système de guidage longitudinal (2) effectuant la mesure de distance ou d'un autre système d'assistance au conducteur (10) et/ou le ralentissement maximal du véhicule automobile (1) pouvant être occasionné par la commande au moyen du système de guidage longitudinal (2) effectuant la mesure de distance ou d'un autre système d'assistance au conducteur (10).

6. Véhicule automobile selon l'une quelconque des revendications précédentes,
**caractérisé en ce que**
deux ou plusieurs signaux d'avertissement, éventuellement différents, sont émis et modifiés.
